# EUROPÄISCHE PATENTSCHRIFT

(11) **EP 3 959 542 B1**
(45) Veröffentlichungstag und Bekanntmachung des Hinweises auf die Patenterteilung: **16.08.2023**
(21) Anmeldenummer: 20721558.3
(22) Anmeldetag: 24.04.2020
(51) Int. Cl.: G01T 1/164, G01T 1/20

(54) **MONOLITHISCHER STRAHLUNGSDETEKTOR FÜR EINEN PET-SCANNER**
MONOLITHIC RADIATION DETECTOR FOR A PET SCANNER
DÉTECTEUR DE RAYONNEMENT MONOLITHIQUE POUR UN SCANNER PET

(30) Priorität: 24.04.2019 DE 102019205828
(43) Veröffentlichungstag der Anmeldung: 02.03.2022
(73) Patentinhaber: Rheinisch-Westfälische Technische Hochschule (RWTH) Aachen, 52062 Aachen (DE)
(72) Erfinder: DEY, Thomas, 52064 Aachen (DE); MÜLLER, Florian, 52074 Aachen (DE); SCHUG, David, 52080 Aachen (DE); SCHULZ, Volkmar, 52146 Würselen (DE)
(74) Vertreter: RCD Patent Giesen, Schmelcher & Griebel Patentwanwälte PartG mbB
(86) Internationale Anmeldenummer: PCT/EP2020/061443
(87) Internationale Veröffentlichungsnummer: WO 2020/216891

(56) Entgegenhaltungen:
- US-A- 5 861 628
- GRAHE JAN ET AL: "Optical Monte-Carlo Simulation to Evaluate Monolithic PET Detector Concepts", 2017 IEEE NUCLEAR SCIENCE SYMPOSIUM AND MEDICAL IMAGING CONFERENCE (NSS/MIC), IEEE, 21. Oktober 2017 (2017-10-21), Seiten 1-6, XP033445900, DOI: 10.1109/NSSMIC.2017.8532632 [gefunden am 2018-11-12]

## Beschreibung

Die Positronen-Emissions-Tomographie (PET) ist als ein bildgebendes Verfahren der Nuklearmedizin bekannt und stellt eine Variante der Emissionscomputertomographie dar. Mittels PET können Schnittbilder von lebenden Organismen erzeugt werden, indem die Verteilung einer radioaktiven Substanz, sogenannter Tracer, sichtbar gemacht wird. Hierdurch lassen sich biochemische und physiologische Funktionen abbilden.

PET beruht auf der gleichzeitigen Detektion zweier Gammastrahlungsphotonen, die nach dem Zerfall eines Positronen-emittierenden Radionuklids entstehen (β+-Zerfall). Bei der Wechselwirkung eines Positrons mit einem Elektron (Annihilation) im Körper werden zwei hochenergetische Photonen (z.B. einige hundert keV, insbesondere 511 keV) in entgegengesetzte Richtungen ausgesandt. Diese Strahlung wird auch als Vernichtungsstrahlung bezeichnet.

Das PET-Gerät enthält typischerweise viele ringförmig um den Patienten angeordnete Detektoren für die Photonen. Das Prinzip der PET-Untersuchung besteht darin, Koinzidenzen zwischen je zwei gegenüberliegenden Detektoren aufzuzeichnen. Aus der zeitlichen und räumlichen Verteilung dieser registrierten Zerfallsereignisse wird auf die räumliche Verteilung der radioaktiven Substanz im Körperinneren geschlossen und eine Serie von Schnittbildern errechnet.

Da die Absorption der Photonen nur von der Dicke des durchstrahlten Gewebes, nicht jedoch vom Entstehungsort der Photonen abhängt, ermöglicht dies zudem eine genaue Quantifizierung der Verteilung der radioaktiven Substanz im Untersuchungsvolumen.

Ein Großteil der bisherigen PET Scanner basiert darauf, dass die zwei hochenergetischen Photonen (gamma photonen) in Kristallen gestoppt werden, in denen ein Szintillationsprozess optische Photonen erzeugt. Die Kristalle werden deshalb häufig auch als Szintillationskristalle bezeichnet. Die Photonen werden anschließend durch optische Sensoren aufgenommen und in elektrische Impulse gewandelt.

In einem PET-Scanner sind die Szintillationskristalle typischerweise ein großer Kostentreiber.

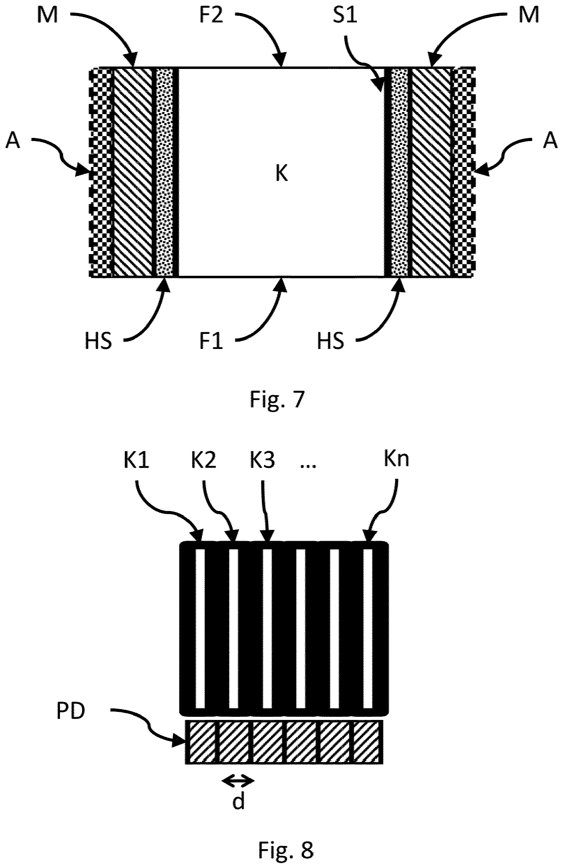

Gegenwärtige Systeme im Klinischen Alltag der Humanmedizin weisen in der Regel keine monolithischen Szintillationskristalle, sondern nebeneinandergefügte segmentierte Szintillationskristalle auf - siehe Figur 8. Um die Segmente sind Zwischenschichten angeordnet. Dabei wird durch die Segmentierung eine räumliche Auflösung zur Verfügung gestellt. Die Segmente K1, K2, K3 ... Kn und die Zwischenschichten werden in aller Regel als fertig gefügtes Bauelement auf den optischen Detektor aufgebracht. Typische Segmente für die klinische Anwendung in Ganzkörperscannern weisen eine Dicke d von circa 3 - 6 mm auf. Die Herstellung der Segmente ist aufwändig, wobei mit abnehmender Größe der Einstrahlfläche die Kosten für die Herstellung ansteigen. Durch solche segmentierte Szintillationskristalle werden gegenwärtig räumliche Auflösungen in 4 - 5 mm ermöglicht. Beispielsweise ist ein kommerzielles System bekannt, bei dem jedem Photodetektor PD genau ein Segment zugeordnet ist. Bei diesem System sind die Photodetektoren in einem Raster von 3,2 mm angeordnet.

Um jedoch die räumliche Auflösung zu erhöhen, müssten PET Detektoren eine Auflösung zur Verfügung stellen die kleiner als das bisherige Raster ist.

Zudem zeigen sich Parallaxenfehler (radial astigmatism), wenn ein Zerfall innerhalb des PET-Rings an einer Stelle außerhalb des Zentrums auftritt. Dies ist insbesondere bei Systemen mit einem kleinen Ringdurchmesser problematisch. Solche "kleinen" PET-Ringe werden z.B. für organspezifische Untersuchungen, wie z.B. Neuroimaging oder Mammografie-Untersuchungen verwendet.

Um diesem Problem entgegenzuwirken wurde in der Vergangenheit die Tiefe der Interaktion (engl. depth-of-interaction, abgekürzt DOI) gemessen.

Bei PET Scannern mit einem großen axialen Blickfeld wird hierzu eine feine Struktur in der Größenordnung von 1 mm in 3 Dimensionen benötigt, um eine Gamma-Interaktion mit einer Auflösung von 1 - 2 mm in der Ebene der Photodetektoren als auch mehrere DOI Ebenen im Volumen der Szintillation zu ermöglichen.

Diese Segmentierung ist jedoch wie bereits aufgeführt aufwändig und kostspielig. Zudem führen die Zwischenschichten zwischen den Segmenten dazu, dass die tatsächlich verfügbare Sensorfläche und damit die Sensitivität abnimmt.

Es zeigt sich, dass die Kosten für solche segmentierten Szintillationskristalle im Vergleich zu herkömmlichen Szintillationskristallen, wie sie z.B. in einem Ganzkörper PET-Scanner verwendet werden, bei gegebener Geometrie um einen Faktor 3-5 erhöhen.

Eine Alternative zu segmentierten Szintillationskristalle stellen monolithische Blöcke aus szintillierendem Material dar. Monolithische Szintillationskristalle erstrecken sich über mehrere Photodetektoren. Diese Art von Szintillationskristall erlaubt eine Bestimmung der Interaktionsposition des hochenergetischen Photons inklusive DO! basierend auf der registrieren Lichterverteilung der Photodetektoren.

Es ist bekannt, dass Licht, welches im Szintillationskristall erzeugt wird, auch in die Randbereiche strahlt. Dabei kann es zu Reflektionen kommen, die eine Ermittlung der dreidimensionalen Interaktionsposition erschweren. Dies betrifft insbesondere die Randbereiche.

Um diesem Problem zu begegnen wurde in der Vergangenheit vorgeschlagen Daten von Photodetektoren am Rand von der weiteren Datenverarbeitung auszunehmen oder eine schlechtere Auflösung im Randbereich zu akzeptieren. Allerdings ist dieser Ansatz teuer, denn das teure Material der Szintillationskristalle wird im Randbereich verbaut ohne einen wertvollen Beitrag zu liefern.

Andere Ansätze verwenden eine absorbierende Farbbeschichtung der Randbereiche, siehe z.B. "Performance Study of a Large Monolithic LYSO PET Detector with Accurate Photon DOI Using Retroreflector Layers", von Andrea Gonzälez-Montoro et al, veröffentlicht in IEEE Transactions on Radiation and Plasma Medical Sciences (Volume: 1, Issue: 3, May 2017), Seite 229 - 237, DOI: 10.1109/TRPMS.2017.2692819. Dadurch wird der Bereich eingeschränkt jedoch nicht eliminiert. Dennoch verbleiben in diesem Ansatz Probleme, z.B. ist die Energieauflösung eingeschränkt.

Aus der Schrift GRAHE "Optical Monte-Carlo Simulation to Evaluate Monolithic PET Detector Concepts" der Autoren Jan et al. veröffentlicht in 2017 IEEE NUCLEAR SCIENCE SYMPOSIUM AND MEDICAL IMAGING CONFERENCE (NSS/MIC), IEEE, doi:10.1109/NSSMIC.2017.8532632, Seiten 1 - 6, ist weiterhin bekannt diffus reflektierende bzw. rückstrahlende Umhüllungen zu verwenden.

Aus dem US-Patent US 5,861,628 ist weiterhin bekannt Silikongel mit einem Brechungsindex von 1,42 einzubringen, um sowohl eine mechanisch als auch optisch gute Kopplung bereitzustellen.

Es wäre jedoch wünschenswert eine Lösung anzubieten, die über die gesamte Fläche eine im Wesentlichen gleiche Verarbeitung der Daten und eine im Wesentlichen gleiche Auflösung zur Verfügung stellen kann.

Die Aufgabe wird gelöst durch einen monolithischen Strahlungsdetektor für einen PET-Scanner gemäß Anspruch 1. Weitere vorteilhafte Ausgestaltungen sind insbesondere Gegenstand der abhängigen Ansprüche, der Beschreibung und der Figuren.

Nachfolgend wird die Erfindung näher unter Bezug auf die Figuren erläutert. In diesen zeigt:
- Fig. 1: eine seitliche Schnittdarstellung eines Strahlungsdetektors ,
- Fig. 2: eine seitliche Schnittdarstellung eines Strahlungsdetektors gemäß Ausführungsformen der Erfindung,
- Fig. 3: eine seitliche Schnittdarstellung eines Strahlungsdetektors gemäß weiterer Ausführungsformen der Erfindung,
- Fig. 4: eine perspektivische Schemadarstellung von Aspekten eines Strahlungsdetektors gemäß Ausführungsformen der Erfindung,
- Fig. 5: eine Aufsicht auf einen weiteren Aspekt eines Strahlungsdetektors gemäß Ausführungsformen der Erfindung,
- Fig. 6: eine perspektivische Schemadarstellung von Aspekten eines Strahlungsdetektors gemäß Ausführungsformen der Erfindung,
- Fig. 7: eine seitliche Schnittdarstellung von Aspekten eines Strahlungsdetektors gemäß Ausführungsformen der Erfindung, und
- Fig. 8: eine seitliche Schnittdarstellung eines weiteren Strahlungsdetektors gemäß Stand der Technik.

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

Angaben mit Zahlenwerten sind in aller Regel nicht als exakte Werte zu verstehen, sondern beinhalten auch eine Toleranz von +/- 1% bis zu +/- 10 %.

Bezugnahme auf Standards oder Spezifikationen oder Normen sind als Bezugnahme auf Standards bzw. Spezifikationen bzw. Normen, die zum Zeitpunkt der Anmeldung und/oder - soweit eine Priorität beansprucht wird - zum Zeitpunkt der Prioritätsanmeldung gelten / galten zu verstehen. Hiermit ist jedoch kein genereller Ausschluss der Anwendbarkeit auf nachfolgende oder ersetzende Standards oder Spezifikationen oder Normen zu verstehen.

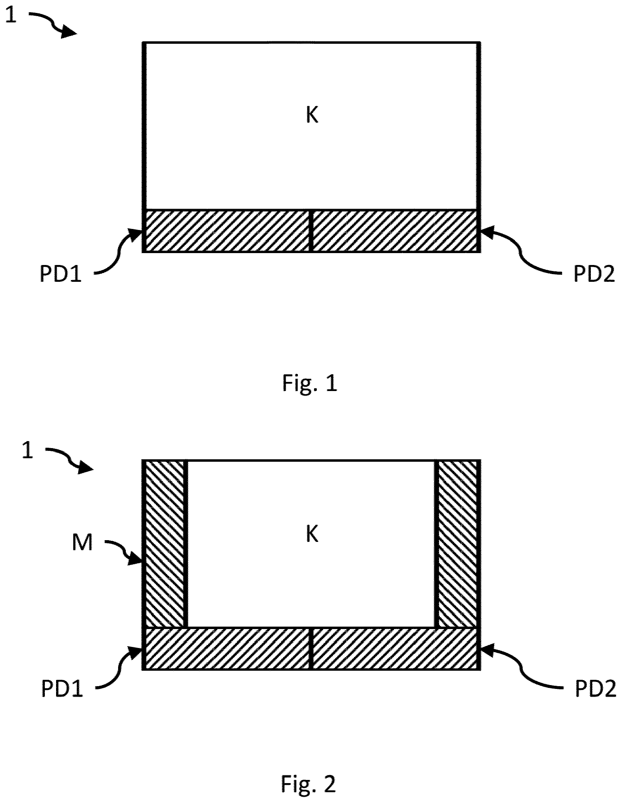

In den Figuren 2 bis 7 sind Aspekte von Ausführungsformen der Erfindung dargestellt. Ein erfindungsgemäßer monolithischer Strahlungsdetektor 1 für einen PET-Scanner weist einen monolithischen Szintillations-Kristall K und eine zumindest 1-dimensionale Anordnung von zumindest 2 Photodetektoren PD1, PD2 auf. Monolithisch bedeutet in diesem Zusammenhang, dass ein einziger Szintillations-Kristall K im Unterschied zu einem segmentierten Szintillations-Kristall K1 ... Kn gemäß Figur 8 verwendet wird.

Dabei stellt die zumindest 1-dimensionale Anordnung, d.h. die lineare Hintereinanderanordnung von zumindest zwei Photodetektoren PD1, PD2 die untere Grenze dar, ab der eine Positionserkennung (theoretisch) durchgeführt werden könnte. Häufiger werden hier eine Vielzahl von Photodetektoren anzutreffen sein. Ebenso wird häufiger auch eine 2-dimensionale Anordnung von zumindest 4 Photodetektoren anzutreffen sein. Dies ermöglicht es Photodetektoren, die ursprünglich für andere Bereiche, wie z.B. Farbscanner, Kameras etc. entwickelt wurden, zu verwenden.

Der Szintillations-Kristall K weist einen Brechungsindex n_{SK} für ein gegebenes Licht auf.

Die mindestens 1-dimensionale Anordnung von zumindest 2 Photodetektoren PD1, PD2 ist parallel zu einer ersten Fläche F1 des monolithischen Szintillations-Kristalls K angeordnet.

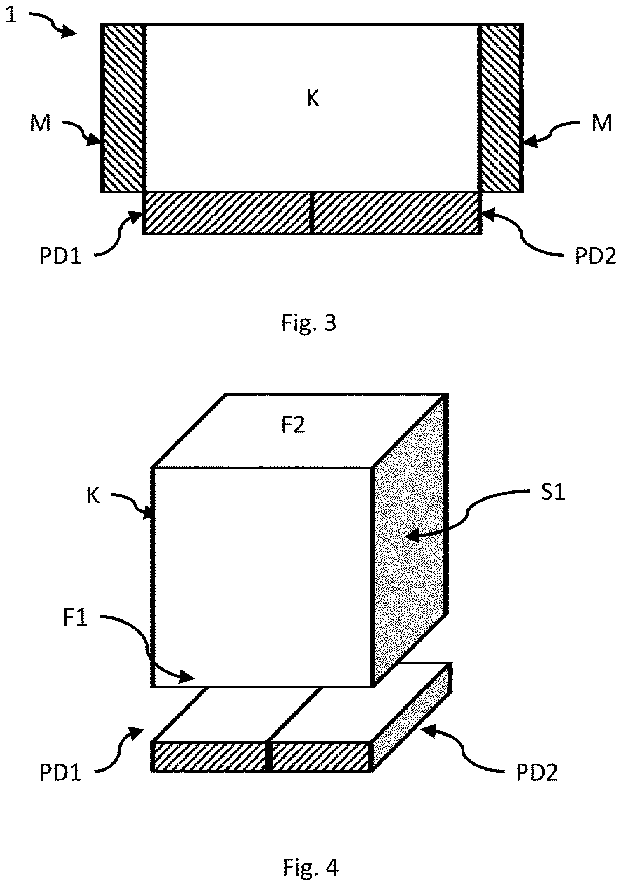

Die Anordnung der Fläche F1 des Szintillations-Kristalls K in Bezug auf die Photodetektoren PD1, PD2 ist in Figur 4 beispielsweise dargestellt. Dort ist unter dem Szintillations-Kristall K eine Anordnung von 2 Photodetektoren PD1, PD2 gezeigt. Die Fläche F2 ist oben auf dem quaderförmig dargestellten Szintillations-Kristall K aufzufinden. Durch diese Ebene tritt Strahlung in den Szintillations-Kristall K ein. D.h. die zweite Fläche F2 stellt eine Eintrittsfläche für Gamma-Quanten einer Positron-Elektron-Annihilation dar. Erzeugtes Licht soll insbesondere durch die Fläche F1 auf der der Fläche F2 gegenüberliegenden Seite, die im Wesentlichen parallel zur Fläche der Photodetektoren PD1, PD2 ist, austreten.

Wie weiterhin aus Figur 4 ersichtlich ist, weist der Szintillations-Kristall K mindestens eine weitere Fläche S2- im Falle eines quaderförmigen Szintillations-Kristalls K z.B. 4 Seitenflächen - auf.

Für das Verständnis beschränken wir uns im Folgenden auf eine Seitenfläche S1. Es ergibt sich jedoch, dass die gleichen Annahmen auch für andere oder auch alle Seitenflächen getroffen werden können. Insofern steht die nachfolgende Beschreibung auch für andere oder alle Seitenflächen.

Die Seitenfläche S1 weist als aufspannende Vektoren zumindest einen Normalvektor der ersten Fläche F1 und/oder der zweiten Fläche F2 als aufspannenden Vektor auf.

Die Seitenfläche S1 des erfindungsgemäßen Szintillations-Kristall K weist zumindest an der Grenzfläche zum Szintillations-Kristall K ein Material M mit in etwa gleichem Brechungsindex n_{M} wie der Brechungsindex des Szintillations-Kristalls n_{SK} auf. Anders als der SzintillationsKristall K weist das Material M der Seitenfläche S1 keinen Szintillations-Effekt auf. D.h. es können in dem Material keine optischen Quanten erzeugt werden.

Durch die Ausgestaltung mit einem Material von nahezu gleichem Brechungsindex n_{M} wird erreicht, dass es an der Grenzfläche, wenn überhaupt so jedoch nur in geringem Maße, zu Reflektionen kommt. Daher wird Licht nicht wie in bisherigen Systemen am Rand zurückreflektiert, sondern kann kontrolliert abgeleitet werden, sodass ein Photodetektor frei von reflektiertem Licht ist. Hierdurch können zum einen alle Photdetektoren für eine nachfolgende Datenverarbeitung herangezogen werden, ohne dass es zu den bisherigen nachteiligen Effekten kommt.

D.h. anders als mit bisherigen Ansätzen kann nun auch in einem monokristallinen Szintillations-Kristall K von Gamma-Strahlungs-Interkation am Rand in gleicher Weise für die Positionsbestimmung verwendet werden wie Gamma-Strahlungs-Interkation im zentraleren Bereich des monokristallinen Szintillations-Kristalls K.

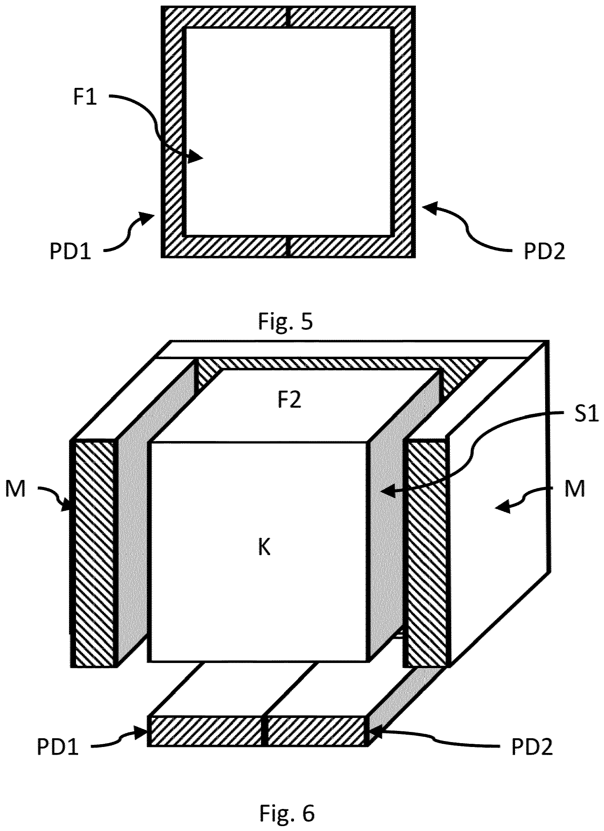

In einer Ausführungsform der Erfindung ist die erste Fläche F1 kleiner (so z.B. in Figur 2, 5) oder gleich (so z.B. in Figur 3, 4, 6) der Ausdehnung der 1-dimensionalen Anordnung von zumindest 2 Photodetektoren PD1, PD2.

D.h. die Erfindung lässt viele Freiheitsgrade, so z.B. auch die Anordnung, dass Licht aus dem Material M ebenfalls noch auf einen Photodetektor gelangen kann. D.h. nicht nur Licht, das durch den Szintillations-Kristalls K unmittelbar auf einen Photodetektor gelangt kann ausgewertet werden, sondern auch Licht, welches in das Material M einstrahlt. Bevorzugt wird im Falle, dass Licht aus dem Material M durch einen oder mehrere Photodetektor aufgefangen und ausgewertet werden soll, der Brechungsindex n_{M} ungefähr gleich n_{SK} gewählt sein.

In der Erfindung ist vorgesehen, dass die Seitenfläche S1 ein Material M mit einem Gradientenindex aufweist. D.h. der Brechungsindex n_{M} ist ortsabhängig variabel. Der Gradientenverlauf in der unmittelbaren Nachbarschaft zum Szintillations-Kristall K ist ungefähr gleich dem Brechungsindex n_{SK} des Szintillations-Kristalls K gewählt, während mit zunehmendem Abstand zur Seitenfläche S1 des Szintillations-Kristalls K der Brechungsindex abnimmt. Dabei kann ein stufenförmiger oder kontinuierlicher Verlauf vorgesehen sein.

Mit einem Gradientenverlauf kann das bisher reflektierte Licht seitlich abgeleitet werden ohne dass es in einen Photodetektor unmittelbar unter dem Szintillations-Kristalls K gelangen kann.

In Ausführungsformen, wie in Figur 6 für drei Seiten angedeutet, umschließt das Material M die Seitenfläche(n) S1 des Szintillations-Kristalls K. Dabei wurde in Figur 6 die frontseitige Seitenfläche zur besseren Sicht ohne das Material M dargestellt.

In einer weiteren Ausführungsform der Erfindung ist der Szintillations-Kristall K im Wesentlichen quaderförmig. Andere Formen können jedoch ohne weiteres bereitgestellt werden. D.h. die Ausführungsform kann an alle räumlichen Erfordernisse angepasst werden.

In noch einer weiteren Ausführungsform der Erfindung ist auf der vom Szintillations-Kristall K abgewandten Fläche des Materials M in Bezug auf die Seitenfläche S1 - wie in Figur 7 dargestellt - ein absorbierendes Material A angeordnet. D.h. reicht die Dicke des Materials M nicht aus, so kann Licht, das in den Außenbereich des Material M gelangt dort geschwächt oder absorbiert werden.

Gemäß einer weiteren Ausführungsform der Erfindung ist alternativ oder zusätzlich zu einem absorbierenden Material A auf der dem Szintillations-Kristall K zugewandten Fläche des Materials M in Bezug auf die Seitenfläche S1 ein halbdurchlässiger Spiegel HS angeordnet, sodass Strahlung aus dem Szintillations-Kristall K in das Material M durch den halbdurchlässigen Spiegel HS eindringen kann, Strahlung aus dem Material M in Richtung des Szintillations-Kristalls K jedoch gespiegelt wird.

Geeignete halbdurchlässige Spiegel HS können z.B. durch Bedampfen (Metalloxid) hergestellt sein. Der halbdurchlässige Spiegel HS kann auf dem Szintillations-Kristall K und/oder auf dem Material M bereitgestellt sein.

Insbesondere kann das Material M auf der Seitenfläche S1 ein organisches oder ein mineralisches Glas aufweisen.

D.h. die Erfindung erlaubt eine weite Materialwahl, sodass der Brechungsindex des n_{M} weitestgehend an den Brechungsindex n_{SK} des Szintillations-Kristalls K angepasst werden kann.

Ohne Beschränkung der Allgemeinheit kann als Szintillations-Kristall K jedes geeignete Material verwendet werden. Insbesondere erlaubt die Erfindung jedoch die Verwendung von mit Cerium, Kupfer oder Calcium dotierte Lutetium basierte Szintillations-Kristalle oder ein Bismuth-Germanath Bi₄Ge₃0₁ oder Lutetiumoxyorthosilicat Lu₂SiO₅.

Weiterhin kann das Material M der Seitenfläche S1 einen Brechungsindex von etwa 1,74 bis 1,84 aufweisen.

Weiterhin kann das Material M der Seitenfläche S1 einen fluoreszenten Farbstoff aufweisen. Die Verwendung eines fluoreszenten Farbstoffes erlaubt die Lichtfrequenz des eintretenden Lichtes zu ändern. Hierdurch kann das Licht bei Eintreffen auf dem Photodetektor als solches Licht erkannt werden oder aber das Fluoreszenz kann vom Photodetektor nicht erkannt werden. Im ersten Fall kann das Photodetektorsignal einer geeigneten (anderen) Signalverarbeitung zugeführt werden. Im zweiten Fall wird das Licht nicht mehr als Störstrahlung wahrgenommen.

D.h. durch die Verwendung von kostengünstigem Material M kann entweder Material des Szintillations-Kristall K in Bezug auf die gleiche Photodetektorfläche eingespart werden (Figur 2) oder aber Material M hinzugefügt (Figuren 3, 6 und 7) werden.

Durch diese Ausgestaltungen wird der Szintillations-Kristall K besser als im Stand der Technik ausgenutzt und erlauben auch im Randbereich Empfindlichkeiten vergleichbar der Empfindlichkeit im Zentrum. Zudem erlauben es die Ausgestaltungen die Anforderungen an die Nachverarbeitung zu reduzieren, da nunmehr auch mit weniger Aufwand (und weniger Strahlungsereignissen) auch im Randbereich zuverlässige Ergebnisse erhalten werden können.

Als Anhaltspunkt kann z.B. angenommen werden, dass in bisherigen Anordnungen ein Szintillations-Kristall K mit einer Grundfläche F1 von circa 50 mm auf 50 mm (geeignet z.B. für einen neuro-PET Scanner) aufweisen könnte. Durch die Erfindung kann circa 5% -20 %, insbesondere jedoch 10 % -20 %, bevorzugt 16 % Material für den Szintillations-Kristall K eingespart werden und durch nicht szintillierendes Material M ersetzt werden.

Dabei macht sich die Erfindung vorteilhaft zu eigen, dass starke Reaktionen durch Streulicht insbesondere bei Lichtgenerierung im Randbereich von circa wenigen mm, typischerweise 1-5, besonders austrägt im Bereich von 3 mm und darunter auftreten. D.h., wenn Licht aus diesen Regionen wenig Reflektion beiträgt, kann das dort entstehende Licht gut ausgewertet werden.

Die beschriebene Erfindung reduziert die Menge an zu prozessierenden Daten durch Ausschluss oder Verhindern nicht nutzbarer Interaktionsereignisse. Dadurch werden geringere Anforderungen an die Datenübertragung, Prozessierung und daraus folgend die notwendige Hardware und den Stromverbrauch der Komponenten gestellt. Ei geringer Stromverbrauch führt auch dazu, dass weniger Abwärme angeführt wird. Dies ist insbesondere bei kombinierten PET/Magnetresonanzgeräten vorteilhaft, da weniger Kühlleistung benötigt wird.

Als zusätzlichen Effekt reduziert die Erfindung die Totzeit der verwendeten Photodetektoren aus den zuvor genannten Gründen, da die Photodetektoren keine nicht-verwertbaren Ereignisse auslesen. Dies führt zu einer gesteigerten Sensitivität des erfindungsgemäßen Strahlungsdetektors 1, insbesondere für den Bereich höherer Raten von Annihilationsereignissen. Des Weiteren kann im gleichen Betriebsbereich des erfindungsgemäßen Strahlungsdetektors 1eine Überlagerung optischer Photonen mehrerer Interaktionen innerhalb kurzer Zeit im Szintillationskristall (optischer Pile-Up) reduziert werden. Dies führt wiederum zu einer einfacheren Auswertung solcher Interaktionsereignisse.

Wird hingegen am Rand Material M hinzugefügt, so können auch diese am Rand generierten Photonen zur Positionsbestimmung herangezogen werden.

D.h. während im Fall des Ersetzens von Material die Kosten reduziert werden können kann im Fall des zusätzlichen Materials die Empfindlichkeit durch die bessere Ausnutzung des Szintillations-Kristall K vergrößert werden.

### Bezugszeichenliste

- 1: monolithischer Strahlungsdetektor
- K: monolithischer Szintillations-Kristall
- PD1: Photodetektor
- PD2: Photodetektor
- F1: erste Fläche
- F2: zweite Fläche
- S1: Seitenfläche
- M: Material
- HS: halbdurchlässiger Spiegel
- n_{M}: Brechungsindex des Materials M
- n_{SK}: Brechungsindex des Szintillations-Kristalls K

## Patentansprüche

1. Monolithischer Strahlungsdetektor (1) für einen PET-Scanner, aufweisend einen monolithischen Szintillations-Kristall (K) und eine 1-dimensionale Anordnung von zumindest 2 Photodetektoren (PD1, PD2), wobei der Szintillations-Kristall (K) einen Brechungsindex für ein gegebenes Licht aufweist, wobei die 1-dimensionale Anordnung von zumindest 2 Photodetektoren (PD1, PD2) parallel zu einer ersten Fläche (F1) des monolithischen Szintillations-Kristalls angeordnet ist, wobei die gegenüberliegende zweite Fläche (F2) eine Eintrittsfläche für Gamma-Quanten einer Positron-Elektron-Annihilation darstellt, wobei der Kristall (K) zumindest eine Seitenfläche (S1) aufweist, die zumindest einen Normalvektor der ersten Fläche und/oder der zweiten Fläche als aufspannenden Vektor aufweist, wobei die Seitenfläche (S1) zumindest an der Grenzfläche zum Szintillations-Kristall (K) ein Material (M) mit in etwa gleichem Brechungsindex wie der Brechungsindex des Szintillations-Kristalls aufweist, wobei das Material (M) der Seitenfläche keinen Szintillations-Effekt entsprechend dem Szintillations-Kristall aufweist, **dadurch gekennzeichnet, dass** die Seitenfläche (S1) ein Material mit einem Gradientenindex aufweist.

2. Monolithischer Strahlungsdetektor (1) nach Anspruch 1, **dadurch gekennzeichnet, dass** die erste Fläche (F1) kleiner oder gleich der Ausdehnung der 1-dimensionalen Anordnung von zumindest 2 Photodetektoren (PD1, PD2) ist.

3. Monolithischer Strahlungsdetektor (1) nach einem der vorhergehenden Ansprüche, **dadurch gekennzeichnet, dass** das Material (M) die Seitenfläche (S1) den Szintillations-Kristall umschließt.

4. Monolithischer Strahlungsdetektor (1) nach einem der vorhergehenden Ansprüche, **dadurch gekennzeichnet, dass** der Szintillations-Kristall (K) im wesentlichen quaderförmig ist.

5. Monolithischer Strahlungsdetektor (1) nach einem der vorhergehenden Ansprüche, **dadurch gekennzeichnet, dass** auf der vom Szintillations-Kristall (K) abgewandten Fläche der Seitenfläche (S1) ein absorbierendes Material (A) angeordnet ist.

6. Monolithischer Strahlungsdetektor (1) nach einem der vorhergehenden Ansprüche, **dadurch gekennzeichnet, dass** auf der dem Szintillations-Kristall (K) zugewandten Fläche der Seitenfläche ein halbdurchlässiger Spiegel (HS) angeordnet ist, sodass Strahlung aus dem Szintillations-Kristall (K) eindringen kann, Strahlung in Richtung des Szintillations-Kristalls (K) gespiegelt wird.

7. Monolithischer Strahlungsdetektor (1) nach einem der vorhergehenden Ansprüche, **dadurch gekennzeichnet, dass** die Seitenfläche (S1) ein organisches oder ein mineralisches Glas aufweist.

8. Monolithischer Strahlungsdetektor (1) nach einem der vorhergehenden Ansprüche, **dadurch gekennzeichnet, dass** der Szintillations-Kristall (K) ein insbesondere mit Cerium, Kupfer oder Calcium dotierter Lutetium basierter Szintillations-Kristall oder ein Bismuth-Germanath Bi₄Ge₃0₁ oder Lutetiumoxyorthosilicat Lu₂SiO₅ ist.

9. Monolithischer Strahlungsdetektor (1) nach einem der 2. Ansprüche 1 bis 7 **dadurch gekennzeichnet, dass** das Material (M) der Seitenfläche (S1) einen Brechungsindex von etwa 1,74 bis 1,84 aufweist.

10. Monolithischer Strahlungsdetektor (1) nach einem der vorhergehenden Ansprüche, **dadurch gekennzeichnet, dass** das Material (M) der Seitenfläche (S1) einen fluoreszenten Farbstoff aufweist.

## Claims

1. Monolithic radiation detector (1) for a PET scanner, comprising a monolithic scintillation crystal (K) and a 1-dimensional arrangement of at least 2 photodetectors (PD1, PD2), wherein the scintillation crystal (K) comprises a refractive index for a given light, wherein the 1-dimensional arrangement of at least 2 photodetectors (PD1, PD2) is arranged parallel to a first face (F1) of the monolithic scintillation crystal, wherein the opposite second face (F2) represents an entrance face for gamma quanta of a positron-electron annihilation, wherein the crystal (K) has at least one side face (S1) having at least one normal vector of the first face and/or of the second face as a spanning vector, wherein said side face (S1) comprises at least at the interface with the scintillation crystal (K) a material (M) having approximately the same refractive index as the refractive index of the scintillation crystal, wherein the material (M) of the side surface having no scintillation effect corresponding to the scintillation crystal, **characterized in that** the side surface (S1) comprises a material having a gradient index.

2. Monolithic radiation detector (1) according to claim 1, **characterized in that** that the first surface (F1) is smaller than or equal to the extent of the 1-dimensional arrangement of at least 2 photodetectors (PD1, PD2).

3. Monolithic radiation detector (1) according to one of the preceding claims, **characterized in that** the material (M) encloses the side surface (S1) of the scintillation crystal.

4. Monolithic radiation detector (1) according to any one of the preceding claims, **characterized in that** the scintillation crystal (K) is substantially cuboidal.

5. Monolithic radiation detector (1) according to one of the preceding claims, **characterized in that** an absorbing material (A) is arranged on the surface of the side surface (S1) facing away from the scintillation crystal (K).

6. Monolithic radiation detector (1) according to one of the preceding claims, **characterized in that** a semi-transparent mirror (HS) is arranged on the surface of the side face facing the scintillation crystal (K), so that radiation from the scintillation crystal (K) can penetrate, radiation in the direction of the scintillation crystal (K) is reflected.

7. Monolithic radiation detector (1) according to one of the preceding claims, **characterized in that** the side surface (S1) comprises an organic or a mineral glass.

8. Monolithic radiation detector (1) according to one of the preceding claims, **characterized in that** the scintillation crystal (K) is a lutetium-based scintillation crystal doped in particular with cerium, copper or calcium, or a bismuth-germanate BiₐGeₐ0₁ or lutetium oxyorthosilicate Lu₂SiO₅.

9. Monolithic radiation detector (1) according to any one of claims 1 to 7 **characterized in that** the material (M) of the side surface (S1) comprises a refractive index of about 1.74 to 1.84.

10. Monolithic radiation detector (1) according to one of the preceding claims, **characterized in that** the material (M) of the side surface (S1) comprises a fluorescent dye.

## Revendications

1. Détecteur de rayonnement monolithique (1) pour un tomodensitomètre à émission de positons (TEP), comportant un cristal scintillant monolithique (K) et un système unidimensionnel d'au moins 2 photodétecteurs (PD1, PD2), sachant que le cristal scintillant (K) comporte un indice de réfraction pour une lumière donnée, sachant que le système unidimensionnel d'au moins 2 photodétecteurs (PD1, PD2) est disposé parallèlement à une première surface (F1) du cristal scintillant monolithique, sachant que la deuxième surface opposée (F2) représente une surface d'entrée pour des quanta gamma d'une annihilation électronpositon, sachant que le cristal (K) comporte au moins une surface latérale (S1), qui comporte au moins un vecteur normal de la première surface et/ou de la deuxième surface en tant que vecteur étendu, sachant que la surface latérale (S1) comporte au moins sur l'interface avec le cristal scintillant (K) un matériau (M) avec un indice de réfraction à peu près identique que l'indice de réfraction du cristal scintillant de telle manière que l'on ne parvient pas à des réflexions sur l'interface, sachant que le matériau (M) de la surface latérale ne comporte aucun effet de scintillation correspondant au cristal scintillant, **caractérisé en ce que** la surface latérale (S1) comporte un matériau avec un gradient d'indice.

2. Détecteur de rayonnement monolithique (1) selon la revendication 1, **caractérisé en ce que** la première surface (F1) est plus petite ou identique à l'extension du système unidimensionnel d'au moins 2 photodétecteurs (PD1, PD2).

3. Détecteur de rayonnement monolithique (1) selon l'une quelconque des revendications précédentes, **caractérisé en ce que** le matériau (M) de la surface latérale (S1) entoure le cristal scintillant.

4. Détecteur de rayonnement monolithique (1) selon l'une quelconque des revendications précédentes, **caractérisé en ce que** le cristal scintillant (K) est pour l'essentiel de forme parallélépipédique.

5. Détecteur de rayonnement monolithique (1) selon l'une quelconque des revendications précédentes, **caractérisé en ce qu'**un matériau absorbant (A) est disposé sur la surface de la surface latérale (S1) distante du cristal scintillant (K).

6. Détecteur de rayonnement monolithique (1) selon l'une quelconque des revendications précédentes, **caractérisé en ce qu'**un miroir semi-transparent (HS) est disposé sur la surface de la surface latérale, tournée vers le cristal scintillant (K) de telle manière que le rayonnement du cristal scintillant (K) peut pénétrer et le rayonnement est réfléchi en direction du cristal scintillant (K).

7. Détecteur de rayonnement monolithique (1) selon l'une quelconque des revendications précédentes, **caractérisé en ce que** la surface latérale (S1) comporte un verre organique ou un verre minéral.

8. Détecteur de rayonnement monolithique (1) selon l'une quelconque des revendications précédentes, **caractérisé en ce que** le cristal scintillant (K) est un cristal scintillant à base de lutétium doté de cérium, de cuivre ou de calcium ou un germanate de bismuth Bi₄Ge₃0₁ ou un oxyorthosilicate de lutétium Lu₂SiO₅.

9. Détecteur de rayonnement monolithique (1) selon l'une quelconque des revendications 1 à 7, **caractérisé en ce que** le matériau (M) de la surface latérale (S1) comporte un indice de réfraction d'environ 1,74 à 1,84.

10. Détecteur de rayonnement monolithique (1) selon l'une quelconque des revendications précédentes, **caractérisé en ce que** le matériau (M) de la surface latérale (S1) comporte un colorant fluorescent.
